# EUROPEAN PATENT APPLICATION

(11) **EP 2 072 443 A1**
(43) Date of publication of application: **24.06.2009**
(21) Application number: 06811686.2
(22) Date of filing: 12.10.2006
(51) Int. Cl.: B66B 3/02, H01H 36/00

(54) **MAGNETIC POSITION SENSOR**

(71) Applicant: MITSUBISHI ELECTRIC CORPORATION, Chiyoda-ku Tokyo 100-8310 (JP)
(72) Inventor: NISHIZAWA, Hiroshi, Tokyo 100-8310 (JP); SHIKAI, Masahiro, Tokyo 100-8310 (JP); UEDA, Takaharu, Tokyo 100-8310 (JP)
(74) Representative: HOFFMANN EITLE
(86) International application number: PCT/JP2006/320390
(87) International publication number: WO 2008/044303

(57) **Abstract**

In a magnetic position detecting apparatus, a magnetic material member has: a magnet mount portion; a facing portion that faces the magnet mount portion across a detecting space through which a detected body passes; and a connecting portion that is magnetically connected between the magnet mount portion and the facing portion. A magnet is mounted to the magnet mount portion. A magnetic sensor is disposed between the detecting space and the facing portion.

## Description

### TECHNICAL FIELD

The present invention relates to a magnetic position detecting apparatus that can be used as an elevator landing position detecting apparatus, etc., for example.

### BACKGROUND ART

In conventional magnetic proximity switches, a permanent magnet is mounted internally into a first arm of a C-shaped case, and a reed switch is mounted internally into a second arm. When a detected body that is constituted by ferromagnetic material enters a detecting groove of the case, magnetic force from the permanent magnet is interrupted by the detected body, activating the reed switch (see Patent Literature 1, for example).

Patent Literature 1
Japanese Patent Laid-Open No. 2002-243404 (Gazette)

### DISCLOSURE OF THE INVENTION

### PROBLEM TO BE SOLVED BY THE INVENTION

In conventional magnetic proximity switches such as that described above, since the magnetic field, which is open to the detecting groove and surrounding area, is generated by a permanent magnet, strength of the magnetic field at the position of the reed switch is small, and it has not been possible to increase the magnetic flux density difference at the position of the reed switch between when the detected body is positioned inside the detecting groove and when it is not positioned there, facilitating the occurrence of operating point fluctuations.

The present invention aims to solve the above problems and an object of the present invention is to provide a magnetic position detecting apparatus that can improve detecting precision by suppressing the occurrence of operating point fluctuations.

### MEANS FOR SOLVING THE PROBLEM

In order to achieve the above object, according to one aspect of the present invention, there is provided a magnetic position detecting apparatus including: a magnetic material member that is constituted by magnetic material, and that has: a magnet mount portion; a facing portion that faces the magnet mount portion across a detecting space through which a detected body passes; and a connecting portion that is magnetically connected between the magnet mount portion and the facing portion; a magnet that is mounted to the magnet mount portion; and a magnetic sensor that is disposed between the detecting space and the facing portion.

### BRIEF DESCRIPTION OF THE DRAWINGS

Figure 1 is a plan that shows an elevator apparatus that uses a magnetic position detecting apparatus according to Embodiment 1 of the present invention;
Figure 2 is a front elevation that shows a car of the elevator apparatus in Figure 1;
Figure 3 is a cross section of the magnetic position detecting apparatus that is taken along Line III - III in Figure 2;
Figure 4 is a rear elevation of the magnetic position detecting apparatus that is viewed from a direction of Arrow IV in Figure 1;
Figure 5 is a cross section that is taken along Line V - V in Figure 3;
Figure 6 is a cross section that is taken along Line VI - VI in Figure 3;
Figure 7 is an explanatory diagram that shows a magnetic circuit of the magnetic position detecting apparatus in Figure 1; and
Figure 8 is an explanatory diagram that shows the magnetic circuit when a metal plate is present in a detecting space in Figure 7.

### BEST MODE FOR CARRYING OUT THE INVENTION

Preferred embodiments of the present invention will now be explained with reference to the drawings.

### Embodiment 1

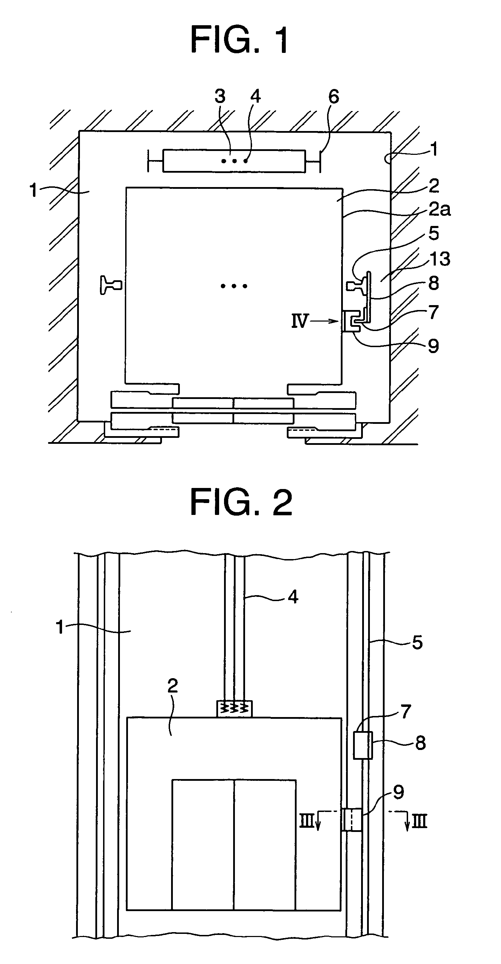

Figure 1 is a plan that shows an elevator apparatus that uses a magnetic position detecting apparatus according to Embodiment 1 of the present invention, and Figure 2 is a front elevation that shows a car from Figure 1.
In the figures, a car 2 and a counterweight 3 are disposed inside a hoistway 1. A hoisting machine (not shown) is installed in an upper portion of the hoistway 1. A plurality of main ropes 4 are wound around a drive sheave of the hoisting machine. The car 2 and the counterweight 3 are suspended inside the hoistway 1 by the main ropes 4, and are raised and lowered by a driving force from the hoisting machine.

A pair of car guide rails 5 that guide raising and lowering of the car 2 and a pair of counterweight guide rails 6 that guide raising and lowering of the counterweight 3 are installed inside the hoistway 1. A plurality of metal plates (the vanes) 7 that function as a detected body are mounted to one of the car guide rails 5 so as to be spaced apart from each other vertically. The metal plates 7 are each mounted to the car guide rail 5 by means of a mounting plate 8. The metal plates 7 are respectively disposed at positions that correspond to landing positions of floors at which the car 2 can stop. A magnetic position detecting apparatus 9 that detects the metal plates 7 is mounted to a side surface of the car 2.

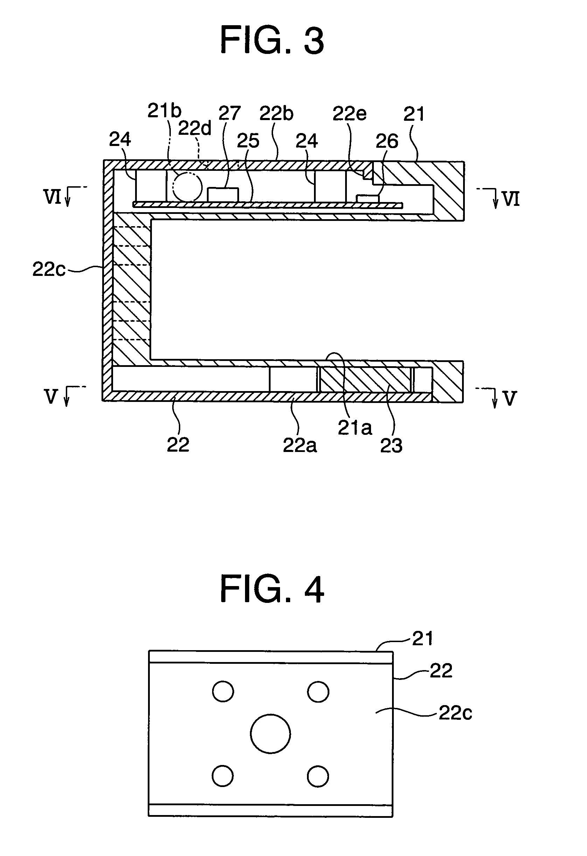

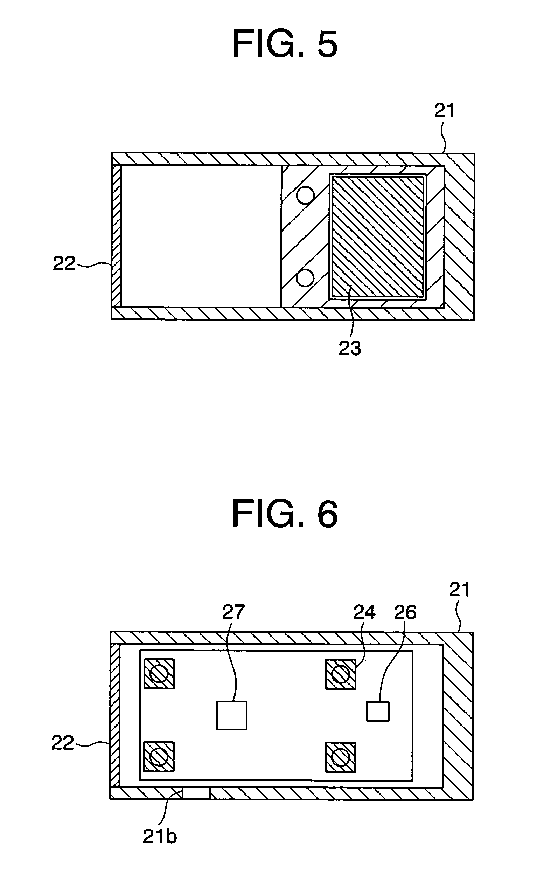

Next, a construction of the magnetic position detecting apparatus 9 according to Embodiment 1 will be explained. Figure 3 is a cross section of the magnetic position detecting apparatus 9 that is taken along Line III - III in Figure 2, Figure 4 is a rear elevation of the magnetic position detecting apparatus 9 that is viewed from a direction of Arrow IV in Figure 1, Figure 5 is a cross section that is taken along Line V - V in Figure 3, and Figure 6 is a cross section that is taken along Line VI - VI in Figure 3.

In the figures, a plastic frame 21 is formed so as to have a C shape (or U shape), and has a groove 21 a through which the metal plates 7 pass due to raising and lowering of the car 2. Specifically, a space inside the groove 21 a constitutes a detecting space in which the metal plates 7 are detected. A magnetic material member 22 that is constituted by magnetic material is mounted to an outer peripheral portion of the frame 21. In this example, the magnetic material member 22 is produced by bending a steel plate that constitutes ferromagnetic material into a C shape (or U shape).

The magnetic material member 22 has: a magnet mount portion 22a; a facing portion 22b that faces the magnet mount portion 22a across the detecting space; and a connecting portion 22c that is magnetically connected between the magnet mount portion 22a and the facing portion 22b. The magnet mount portion 22a and the facing portion 22b are parallel to each other, and the connecting portion 22c is at right angles relative to the magnet mount portion 22a and the facing portion 22b.

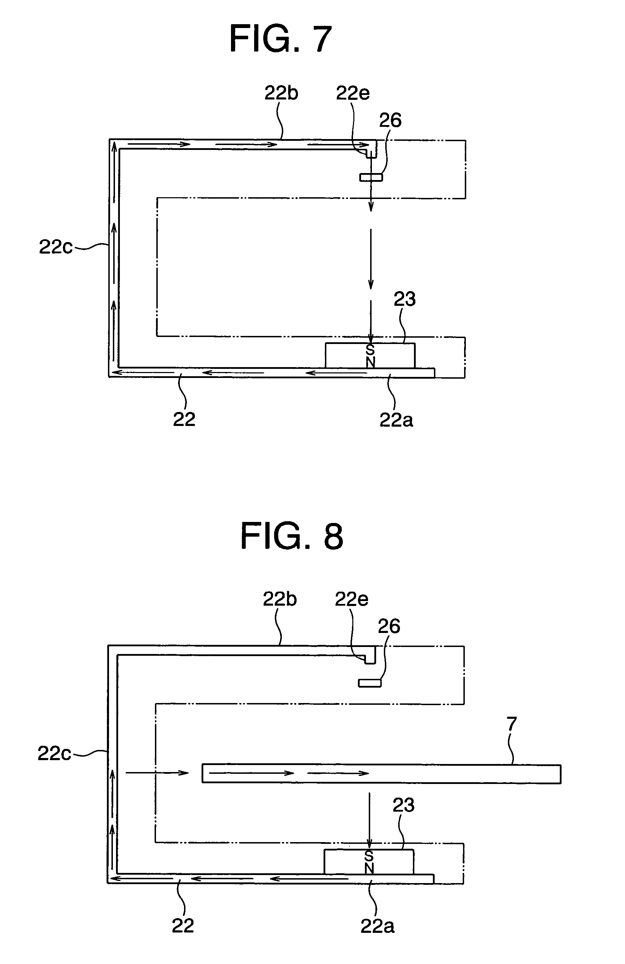

A permanent magnet 23 is fixed to a vicinity of an end portion of the magnet mount portion 22a. The permanent magnet 23 is disposed such that orientation of a magnetic line of force is at right angles to the metal plates 7. A closed-loop magnetic circuit such as that indicated by arrows in Figure 7 is formed by the permanent magnet 23, the magnetic material member 22, and an air gap between the permanent magnet 23 and the facing portion 22b.

A detector circuit board 25 is mounted to a surface of the facing portion 22b near the detecting space by means of a plurality of spacers 24. A Hall element 26 that functions as a magnetic sensor that outputs a voltage signal that corresponds to magnetic flux density is mounted to the detector circuit board 25. The Hall element 26 is disposed between the detecting space and the facing portion 22b. The Hall element 26 is also disposed in the closed-loop magnetic circuit on a central portion in a width direction of the detector circuit board 25. In addition, a direction of magnetic sensitivity of the Hall element 26 is oriented in a direction of the magnetic line of force of the closed-loop magnetic circuit (vertically in Figure 7).

A trimmer (a variable resistance) 27 for adjusting a voltage threshold value that constitutes a reference for determining presence or absence of the metal plates 7 is also mounted to the detector circuit board 25. An adjusting aperture 22d for adjusting the trimmer 27 from outside the magnetic position detecting apparatus 9 is disposed on the facing portion 22b. An outlet aperture 21 b for leading the signal wire out from the detector circuit board 25 is also disposed on the frame 21.

The Hall element 26, the trimmer 27, and other electronic components are mounted to a surface of the detector circuit board 25 near the facing portion 22b. A projecting portion 22e that projects toward the Hall element 26 is disposed on an end portion of the facing portion 22b. In this example, the projecting portion 22e is formed by bending the end portion of the facing portion 22b at a right angle toward the Hall element 26.

Figure 7 is an explanatory diagram that shows a magnetic circuit of the magnetic position detecting apparatus 9 in Figure 1, and Figure 8 is an explanatory diagram that shows the magnetic circuit when a metal plate 7 is present in a detecting space in Figure 7. As the metal plates 7, which are disposed on each floor, pass through the detecting space, the closed-loop magnetic circuit mainly changes as shown in Figure 8, significantly reducing the magnetic flux that passes through the Hall element 26.

Thus, in a magnetic position detecting apparatus 9 according to Embodiment 1, since a closed-loop magnetic circuit is formed by the magnetic material member 22, the density of magnetic flux that passes through the Hall element 26 changes significantly depending on the presence or absence of a metal plate 7. Consequently, the occurrence of operating point fluctuations due to the misalignment of the metal plates 7 can be suppressed, enabling detecting precision and reliability to be improved.

Because the projecting portion 22e that projects toward the Hall element 26 is disposed on the facing portion 22b, magnetic lines of force are concentrated onto the Hall element 26, enabling the magnetic flux density difference between the presence or absence of the metal plates 7 to be increased further, enabling detecting precision and reliability to be further improved.

In addition, since it is conventionally necessary to dispose the permanent magnet and the reed switch such that the direction of the magnetic lines of force are oriented in a longitudinal direction of the reed switch, and there is a limit to the direction of disposition of parts, it has been difficult to reduce overall size. In contrast to that, because the Hall element 26 is used as a magnetic sensor in Embodiment 1, the limit on parts disposition is reduced, enabling overall size to be reduced. Vibration resistance and impact resistance can also be improved, and hysteresis due to contact action can also be reduced.

Moreover, the magnetic sensor is not limited to a Hall element, and a semiconductor magnetic sensor such as a Hall integrated circuit, etc., for example, or other magnetic sensors may also be used.
A plurality of magnetic sensors may also be used.
In addition, in the above example, the magnetic position detecting apparatus 9 is used as an elevator landing position detecting apparatus, but it is also possible to use it as a position detecting apparatus for other moving bodies such as rolling stock, linear motor cars, or baggage conveying devices, etc., for example.

## Claims

1. A magnetic position detecting apparatus comprising:
a magnetic material member that is constituted by magnetic material, and that has:
a magnet mount portion;
a facing portion that faces the magnet mount portion across a detecting space through which a detected body passes; and
a connecting portion that is magnetically connected between the magnet mount portion and the facing portion;
a magnet that is mounted to the magnet mount portion; and
a magnetic sensor that is disposed between the detecting space and the facing portion.

2. A magnetic position detecting apparatus according to Claim 1, wherein a projecting portion that projects toward the magnetic sensor is disposed on the facing portion.

3. A magnetic position detecting apparatus according to Claim 1, wherein the magnetic sensor is a Hall element.
